# EUROPEAN PATENT APPLICATION

(11) **EP 4 601 330 A1**
(43) Date of publication of application: **13.08.2025**
(21) Application number: 25155706.2
(22) Date of filing: 04.02.2025
(51) Int. Cl.: H04R 25/00, H02J 7/00

(54) **HEARING AID**

(30) Priority: 06.02.2024 EP 24156144
(71) Applicant: Oticon A/S, 2765 Smørum (DK)
(72) Inventor: KIEWNING, Malte, DK-2765 Smørum (DK); RAD, Saeed Doagou, DK-2765 Smørum (DK); RØRVIG, Simon, DK-2765 Smørum (DK); LAURSEN, Bjarne, DK-2765 Smørum (DK)
(74) Representative: Demant

(57) **Abstract**

The present disclosure relates to a hearing aid having a charging interface.

## Description

The present disclosure relates to the field of hearing aids. More, the present disclosure relates to rechargeable hearing aids, that is, hearing aids having a rechargeable battery, such as a secondary battery.

The present disclosure relates in an aspect to a hearing device or hearing aid having a contact interface configured for fast charging of that hearing aid or hearing device. The interface allows direct contact to the circuit of the device, while the interface also ensures sealing to the inside of the device, a compact design and is optimized to compensate production tolerances.

For fast charging of small electronic devices such as hearing aids, a direct contact to the circuit of the hearing aid is needed, such an interface also provides access to the hearing aid for the initial programming of the instrument in the production.

The present disclosure provides a concept to integrate a contact interface into a hearing aid, which is used for contact charging and programming of the hearing aid. Charging with high currents (fast charging) requires direct contacts from a charger into the hearing device. Therefore, a contact interface is necessary, which needs to be wear-resistant, and should also be corrosion resistant, easy to access and with compact dimensions.

The present disclosure provides a hearing aid charger configured to charge a hearing aid as also provided herein. The hearing aid charger comprises a hearing aid receptacle configured to receive at least a part of the hearing aid to be charged. Such a hearing aid charger maybe provided in a number of different shapes and sizes. Advantageously, such a hearing aid charger could comprise an internal power supply so that the hearing aid charger may charge a hearing aid without being connected to a mains supply.

Such a hearing aid receptacle could be shaped so as to comprise a charger interface configured to engage the charging interface of the hearing aid when the hearing aid is positioned in the hearing aid receptacle, the charger interface comprising springs acting as electrical conductors during charging.

Such a hearing aid receptacle could be shaped or formed so as to comprise a first and a second magnet configured to interact with a first and second metal plate of the hearing aid to be charged. **In** this way, a more reliable connection could be established during charging of the hearing aid.

The present disclosure provides a hearing aid with an interface where it is possible to access the contact pins from the outside of the hearing aid, while at the same time sealing of the hearing aid (that is, preventing water and/or sweat and/or cerumen from the outside to reach electronics of the hearing aid) is ensured. Further, the hearing aid according to the present disclosure provides/ensures that production tolerances are compensated, and the position tolerance of charge pins are minimized. Fast charging of a small device is best achievable via an interface which have a robust contact charging system, which also apply to the charger.

**In** an aspect of the present disclosure, a hearing aid comprising a contact charging interface is provided. 1. A hearing aid comprising a rechargeable battery and a charging interface configured to mechanically interface with a charger device for establishing contact charging. The hearing aid according to the present disclosure may be configured so that the charging interface comprises a plurality of pins extending through a respective opening of a housing of the hearing aid. This may include a rather small extension from the housing so that the user does not feel the charger interface pins while wearing the hearing aid. The tip of the pin may be substantially flush with the housing. Preferably, pin(s) do not touch the skin of the user when the hearing aid is mounted at the ear of the user, such as when the hearing aid is in it's intended position.

In the present description the term housing is used. The housing may be of a type where e.g. two or more parts are assembled to establish a closed cavity wherein electronics and/or battery of the hearing aid is stored. The housing may alternatively be constituted, at least partly, by a material encapsulating (part of) the electronics and/or the battery. Such an encapsulated electronics part could be arranged in an external housing shell composed of two or more parts. Further, the encapsulated electronics and battery may constitute the outer part of the hearing aid, e.g. as an in-the-ear part having an output transducer. Such a part may be connected to a behind the ear part or be the only part of the hearing aid.

The hearing aid according to the present disclosure may be configured so that the charging interface further comprises programming pads configured to act as a programming interface for the hearing aid, the housing comprising an opening at the programming pads. These pads may be flat elements arranged on a substrate, preferably the same substrate as the charging interface.

A hearing aid according to the present disclosure may be configured so that the charging interface, and possibly the programming interface, is arranged on a substrate having a flexible part so that the charging interface is arranged at an angle in the range of 70 to 90 degree relative to a neighboring substrate part, where substrate part carrying the charging interface and the neighboring substrate part are formed as a single substrate. This part may be provided with a sealing element so that cerumen and other contaminates do not enter the hearing aid housing via the area where the charging interface are exposed to the environment. The sealant element may provide a continuous sealing effect around a periphery of the area/substrate carrying the charging interface.

A hearing aid according to the present disclosure may be configured so that a rubber space is placed between the substrate part carrying the charging interface and a structural part of the hearing aid housing and/or a battery compartment and/or the battery. The space may provide an additional function of stabilizing the area of the substrate carrying the charging interface and/or programming pads.

A hearing aid according to the present disclosure may be configured so that the rubber part is configured to receive (at least a part of) the substrate part carrying the charging interface. At least the rubber part may be configured to abut the surface of the substrate part. Thereby the rubber part could also ensure that the substrate part carrying the charging interface is fixated in directions perpendicular to the substrate surface.

A hearing aid according to the present disclosure may be configured so that the substrate part carrying the charging interface is held in the intended place by a wall part of the hearing aid housing. The wall part may include an extension from the wall-side, such as a snap part or the like.

A hearing aid according to the present disclosure may be configured so that the hearing aid housing comprises a removable cover arranged at the opening at the programming pads. Such a cover may be removable either by hand or using a tool.

A hearing aid according to the present disclosure may be configured so that the cover is color coded to visually indicate if the hearing aid is intended to be used at a right or left ear of a user. This could be a red/blue color coding.

A hearing aid according to the present disclosure may be configured so that the hearing aid is constituted by or comprising an air-conduction type hearing aid, a bone-conduction type hearing aid, or a combination thereof

A hearing aid according to the present disclosure may be configured so that two metal plates are arranged at one end of the hearing aid housing and configured to as to engage with magnets of a charging device to provide a retention force to keep the hearing aid in place in the charger during a charging operation.

In an aspect, the present disclosure further relates to a hearing aid charger configured to charge a hearing aid as disclosed herein.

A hearing aid according to the present disclosure may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal.

The hearing aid may comprise an output unit for providing a stimulus perceived by the user as an acoustic signal based on a processed electric signal. The output unit may a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid). The output unit may (additionally or alternatively) comprise a (e.g. wireless) transmitter for transmitting sound picked up-by the hearing aid to another device, e.g. a far-end communication partner (e.g. via a network, e.g. in a telephone mode of operation, or in a headset configuration).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing said sound.

The wireless receiver and/or transmitter may e.g. be configured to receive and/or transmit an electromagnetic signal in the radio frequency range (3 kHz to 300 GHz). The wireless receiver and/or transmitter may e.g. be configured to receive and/or transmit an electromagnetic signal in a frequency range of light (e.g. infrared light 300 GHz to 430 THz, or visible light, e.g. 430 THz to 770 THz).

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

Most sound signal sources (except the user's own voice) are located far way from the user compared to dimensions of the hearing aid, e.g. a distance d_{mic} between two microphones of a directional system. A typical microphone distance in a hearing aid is of the order 10 mm. A *minimum* distance of a sound source of interest to the user (e.g. sound from the user's mouth or sound from an audio delivery device) is of the order of 0.1 m (> 10 d_{mic}). For such minimum distances, the hearing aid (microphones) would be in the acoustic near-field of the sound source and a difference in level of the sound signals impinging on respective microphones may be significant. A *typical* distance for a communication partner is more than 1 m (>100 d_{mic}). The hearing aid (microphones) would be in the acoustic far-field of the sound source and a difference in level of the sound signals impinging on respective microphones is insignificant.

The difference in *time of arrival* of sound impinging in the direction of the microphone axis (e.g. the front or back of a normal hearing aid) is ΔT= d_{mic}/v_{sound}=0.01/343 [s]=29 µs, where v_{sound} is the speed of sound in air at 20°C (343 m/s).

The hearing aid may comprise antenna and transceiver circuitry allowing a wireless link to an entertainment device (e.g. a TV-set), a communication device (e.g. a telephone), a wireless microphone, a separate (external) processing device, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology, e.g. LE audio), or Ultra WideBand (UWB) technology.

The hearing aid may be constituted by or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g, such as less than 5 g.

The hearing aid may comprise a "forward" (or 'signal') path for processing an audio signal between an input and an output of the hearing aid. A signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an analogue-to-digital (AD) conversion process, where the analogue signal is sampled with a predefined sampling frequency or rate fₛ, fₛ being e.g. in the range from 8 kHz to 48 kHz (adapted to the particular needs of the application) to provide digital samples xₙ (or x[n]) at discrete points in time tₙ (or n), each audio sample representing the value of the acoustic signal at tₙ by a predefined number N_{b} of bits, N_{b} being e.g. in the range from 1 to 48 bits, e.g. 24 bits. Each audio sample is hence quantized using N_{b} bits (resulting in 2^{Nb} different possible values of the audio sample). A digital sample x has a length in time of 1/fₛ, e.g. 50 µs, for *fₛ* = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid, e.g. the input unit, and or the antenna and transceiver circuitry may comprise a transform unit for converting a time domain signal to a signal in the transform domain (e.g. frequency domain or Laplace domain, Z transform, wavelet transform, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-)frequency domain. The frequency range considered by the hearing aid from a minimum frequency fₘᵢₙ to a maximum frequency fₘₐₓ may comprise a part of the typical human audible frequency range from 20 Hz to 20 kHz, e.g. a part of the range from 20 Hz to 12 kHz. Typically, a sample rate fₛ is larger than or equal to twice the maximum frequency fₘₐₓ, fₛ ≥ 2fₘₐₓ. A signal of the forward and/or analysis path of the hearing aid may be split into a number *NI* of frequency bands (e.g. of uniform width), where *NI* is e.g. larger than 5, such as larger than 10, such as larger than 50, such as larger than 100, such as larger than 500, at least some of which are processed individually. The hearing aid may be adapted to process a signal of the forward and/or analysis path in a number *NP* of different frequency channels (*NP* ≤ *NI*)*.* The frequency channels may be uniform or non-uniform in width (e.g. increasing in width with frequency), overlapping or non-overlapping.

The hearing aid may be configured to operate in different modes, e.g. a normal mode and one or more specific modes, e.g. selectable by a user, or automatically selectable. A mode of operation may be optimized to a specific acoustic situation or environment, e.g. a communication mode, such as a telephone mode. A mode of operation may include a low-power mode, where functionality of the hearing aid is reduced (e.g. to save power), e.g. to disable wireless communication, and/or to disable specific features of the hearing aid.

The hearing aid may comprise a number of detectors configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

One or more of the number of detectors may operate on the full band signal (time domain). One or more of the number of detectors may operate on band split signals ((time-) frequency domain), e.g. in a limited number of frequency bands.

The number of detectors may comprise a level detector for estimating a current level of a signal of the forward path. The detector may be configured to decide whether the current level of a signal of the forward path is above or below a given (L-)threshold value. The level detector operates on the full band signal (time domain). The level detector operates on band split signals ((time-) frequency domain).

The hearing aid may comprise a voice activity detector (VAD) for estimating whether or not (or with what probability) an input signal comprises a voice signal (at a given point in time). A voice signal may in the present context be taken to include a speech signal from a human being. It may also include other forms of utterances generated by the human speech system (e.g. singing). The voice activity detector unit may be adapted to classify a current acoustic environment of the user as a VOICE or NO-VOICE environment. This has the advantage that time segments of the electric microphone signal comprising human utterances (e.g. speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may comprise an own voice detector for estimating whether or not (or with what probability) a given input sound (e.g. a voice, e.g. speech) originates from the voice of the user of the system. A microphone system of the hearing aid may be adapted to be able to differentiate between a user's own voice and another person's voice and possibly from NON-voice sounds.

The number of detectors may comprise a movement detector, e.g. an acceleration sensor. The movement detector may be configured to detect movement of the user's facial muscles and/or bones, e.g. due to speech or chewing (e.g. jaw movement) and to provide a detector signal indicative thereof.

The hearing aid may comprise a classification unit configured to classify the current situation based on input signals from (at least some of) the detectors, and possibly other inputs as well. In the present context 'a current situation' may be taken to be defined by one or more of
a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a recurrent neural network, e.g. a trained neural network.

The hearing aid may comprise an acoustic (and/or mechanical) feedback control (e.g. suppression) or echo-cancelling system. Adaptive feedback cancellation has the ability to track feedback path changes over time. It is typically based on a linear time invariant filter to estimate the feedback path but its filter weights are updated over time. The filter update may be calculated using stochastic gradient algorithms, including some form of the Least Mean Square (LMS) or the Normalized LMS (NLMS) algorithms. They both have the property to minimize the error signal in the mean square sense with the NLMS additionally normalizing the filter update with respect to the squared Euclidean norm of some reference signal.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user, e.g. a headset, an earphone, an ear protection device or a combination thereof. A hearing system may comprise a speakerphone (comprising a number of input transducers (e.g. a microphone array) and a number of output transducers, e.g. one or more loudspeakers, and one or more audio (and possibly video) transmitters e.g. for use in an audio conference situation), e.g. comprising a beamformer filtering unit, e.g. providing multiple beamforming capabilities.

### A hearing system:

In a further aspect, a hearing system comprising a hearing aid as described above, in the 'detailed description of embodiments', and in the claims, AND an auxiliary device is moreover provided.

The hearing system may be adapted to establish a communication link between the hearing aid and the auxiliary device to provide that information (e.g. control and status signals, possibly audio signals) can be exchanged or forwarded from one to the other.

The auxiliary device may be constituted by or comprise a remote control, a smartphone, or other portable or wearable electronic device, such as a smartwatch or the like.

The auxiliary device may be constituted by or comprise a remote control for controlling functionality and operation of the hearing aid(s). The function of a remote control may be implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).

The auxiliary device may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC, a wireless microphone, etc.) and adapted for selecting and/or combining an appropriate one of the received audio signals (or combination of signals) for transmission to the hearing aid.

The auxiliary device may be constituted by or comprise another hearing aid. The hearing system may comprise two hearing aids adapted to implement a binaural hearing system, e.g. a binaural hearing aid system.

### Definitions:

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 schematically shows blocks of a hearing aid,
FIG. 2 schematically shows blocks of a hearing aid with external processing,
FIG. 3 schematically shows a hearing aid as described herein,
FIG. 4 schematically shows a hearing aid as described herein arranged in a charger,
Fig. 5 schematically shows a hearing aid as described herein in three views where a charger interface and a programming interface is visible,
Fig. 6 schematically shows a hearing aid as described herein wherein a rubber space is placed between the substrate carrying the charging interface and a housing part,
Fig. 7 schematically shows a hearing aid as described herein where different states of mounting a charging interface is illustrated,
Fig. 8 schematically shows a pin for a charging interface as disclosed herein,
Fig. 9 schematically shows a hearing aid as described herein having two metal plates and being inserted into a charger,
Fig. 10 schematically illustrates how the hearing aid according to the present disclosure is different to a conventional hearing aid,
Fig. 11 schematically illustrates force-displacement curves for a conventional hearing aid and a hearing aid according to the present disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The present disclosure relates to the field of hearing aids.

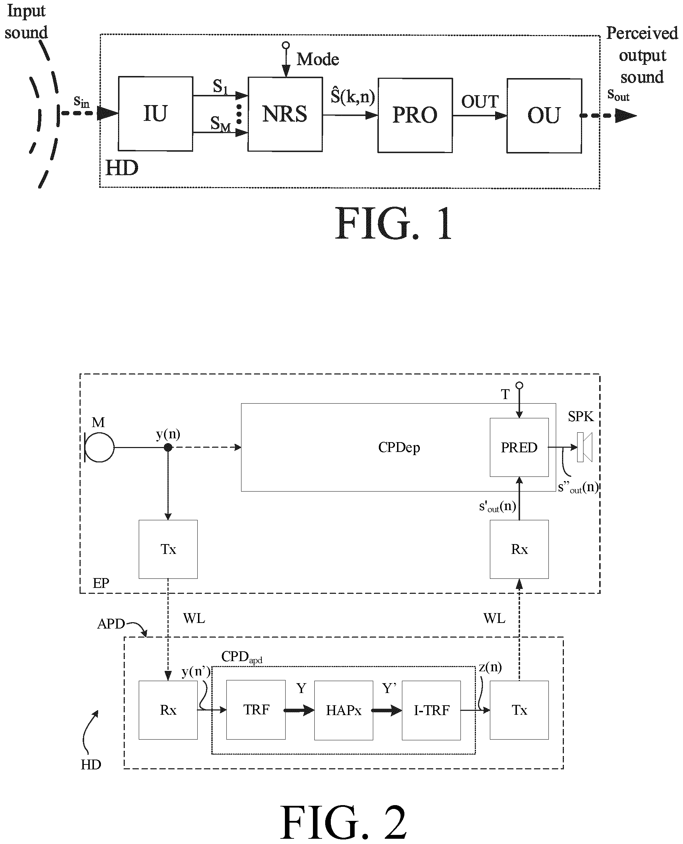

FIG. 1 shows an exemplary block diagram of a hearing device, e.g. a hearing aid (HD), comprising a noise reduction system (NRS) and a hearing aid (audio) processor (HAG) for compensating for a hearing impairment of a user of the hearing device. The hearing device comprises an input unit (IU) for picking up sound sᵢₙ from the environment (e.g. by M input transducers, e.g. microphones) and providing a multitude (M, M > 1) of electric input signals (S₁, ..., S_{M}) and a noise reduction system (NRS) for estimating a target signal S in the input sound sᵢₙ based on the electric input signals and optionally further information, e.g. a mode control signal (Mode). The mode select input (Mode) may be configured to indicate a mode of operation of the system, e.g. of beamformer(s) of the noise reduction system (NRS) and/or a filter coefficient updating strategy, e.g. depending on whether the target signal is the user's own voice or a target signal from the environment of the user (and possibly to indicate a direction to or location of such target sound source). The mode control signal may e.g. be provided from a user interface, e.g. from a remote control device (e.g. implemented as an APP of a smartphone or similar device, e.g. a smartwatch or the like). The mode control signal (Mode) may e.g. be automatically generated, e.g. using one or more sensors, e.g. initiated by the reception of a wireless signal, e.g. from a telephone. The output of the noise reduction system (NRS) may be an estimate of the user's voice Ŝ_{OV}, or an estimate of a target sound from the environment Ŝ_{ENV}. The hearing device, e.g. a hearing aid or headset, further comprises a (audio) processor (PRO) for applying one or more processing algorithms to a signal of the forward path from input to output, e.g. (as here) to the estimate S of the target signal, provided by the noise reduction system, e.g. in a time-frequency representation (S(k,n)). This may e.g. enabled by respective analysis filter banks (e.g. forming part of the input unit (IU_{MIC}), possibly together with respective analogue to digital converters, as appropriate) providing each of the electric input signals (S₁, ..., S_{M}) in a time frequency representation (k,n), k and n being frequency and time indices, respectively. The one or more processing algorithms may e.g. comprise a compression algorithm configured to amplify (or attenuate) a signal according to the needs of the user, e.g. to compensate for a hearing impairment of the user. Other processing algorithms may include frequency transposition, feedback control, etc. The processor (PRO) provides a processed output (OUT) that is fed to a synthesis filter bank (FBS) for conversion from the time-frequency representation (frequency domain) to the time domain. Time domain output signal (out) is fed to an output unit (OU) for conversion to stimuli sₒᵤₜ perceivable by the user as sound (Output sound), e.g. acoustic vibrations (e.g. in air and/or skull bone), the synthesis filter bank (FBS) may be omitted). In a non-hearing aid, e.g. headset application, the processor may be configured to further enhance the signal from the noise reduction system or be dispensed with (so that the estimate S of the target signal is fed directly to the synthesis filter bank/output unit). The target signal may be the user's own voice, and/or a target sound in the environment of the user (e.g. a person (other than the user) speaking, e.g. communicating with the user).

FIG. 2 shows an embodiment of a hearing device (HD), e.g. a hearing aid, configured to be worn at or in an ear of a user and a separate, external, possibly body-worn, audio processing device (APD) configured to be worn or carried by the user (or at least located sufficiently close to the user to stay in communication with the earpiece via a wireless link (WL) implemented by transceivers (Tx/Rx) of the respective devices). The processing device (APD) comprises a computing device (CPD_{apd}, e.g. an audio signal processor or similar.

The hearing device comprises an (at least one) input transducer (here a microphone (M) for converting sound in the environment of the hearing device to an acoustically received electric input signal (y(n)) representing the sound (n indicating a possible time variance). The hearing device further comprises a wireless transmitter (Tx) for transmitting the acoustically received electric input signal (y(n)) or a part (e.g. a filtered part, e.g. a lowpass filtered part) thereof, to the audio processing device (APD). The hearing device further comprises a wireless receiver (Rx) for receiving a processed signal (z(n)) from the audio processing device, at least in a normal mode of operation of the hearing device. The wireless transmitter and receiver (Tx, Rx) may be provided as antenna and transceiver circuitry for establishing an audio communication link (WL) according to a standardized of proprietary (short range) protocol. The hearing device further comprises an output transducer (here a loudspeaker (SPK)) for converting a (final) processed signal (s'ₒᵤₜ(n)) to stimuli perceived by the user as sound. The processed signal (s'ₒᵤₜ(n)) may, at least in a normal mode of operation of the hearing device, be constituted by or comprise at least a part processed signal (z(n)) provided by the audio processing device. The processed signal (s'ₒᵤₜ(n)) may alternatively (or in a separate ('stand alone') mode be constituted by a processed signal provided by the earpiece itself (in which case it may include appropriate processing capacity for processing the electric input signal (y(n)) and providing the processed signal (s'ₒᵤₜ(n)) to the output transducer (SPK)). The optional processing of the acoustically received signal (y(n)) may e.g. be of interest in a mode of operation, where no contact to the audio processing device (APD) can be established (e.g. to provide the user with basic functions of the hearing device (e.g. hearing loss compensation)).

The audio processing device (APD) comprises a wireless receiver (Rx) for receiving the acoustically received electric input signal y(n), or a part thereof, from the earpiece (EP), and is configured to provide a received signal y(n) representative thereof. The audio processing device (APD) (e.g. the computing device (CPD_{apd})) further comprises a (hearing aid) processor part (HAP) for applying a processing algorithm (e.g. including a neural network) to said received signal (y(n)), or to a signal originating therefrom, e.g. a transformed version thereof (Y, e.g. provided by transform unit (TRF), e.g. a Fourier transform unit), and to provide a modified signal (Y'). The processor part (HAP) may e.g. be configured to compensate for a hearing impairment of the user (e.g. by applying a compressive amplification algorithm, e.g. providing a frequency and/or level dependent gain (or attenuation) to be applied to the input signal (y'(n), or Y). In the embodiment of FIG. 2, the audio processing device (APD) (e.g. the computing device (CPD_{apd})) comprises respective transform domain and inverse transform domain units (TRF, I-TRF) to convert a signal in the time domain (here the received signal (y'(n) from the earpiece) to a transform domain (e.g. the time-frequency domain), cf. signal Y, and back again (here the processed signal Y' in the transform domain to z(n) in the time domain).

The signals transmitted from the hearing device to the (external) audio processing device (APD), via the wireless link (WL), and/or from the audio processing device (APD) to the hearing device, do not necessarily have to be 'audio signal(s)' as such. It may as well be features derived from the audio signal(s). E.g. instead of transmitting an audio signal back to the hearing device, a gain derived from the predicted signal could be transmitted back to the earpiece and applied to an appropriately processed (e.g. delayed) version of the electric input signal y(n)).

The term 'or a processed version thereof' may e.g. cover such extracted features from an original audio signal. The term 'or a processed version thereof' may e.g. also cover an original audio signal that has been subject to a processing algorithm that applies gain or attenuation and/or delay to the original audio signal and this results in a modified audio signal (preferably enhanced in some sense, e.g. noise reduced relative to a target signal, or simply delayed).

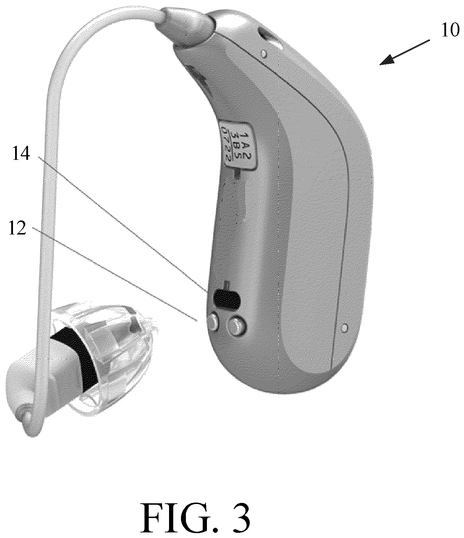

FIG. 3 schematically shows hearing instrument with charge pins and colour marking covering a programming interface. The two contact pins 12 are visible, which are used to connect to contact springs in the charger. A cover 14 is arranged over a set of programming interface pads. The programming pads are here two pads. Other number of pads may be utilized.

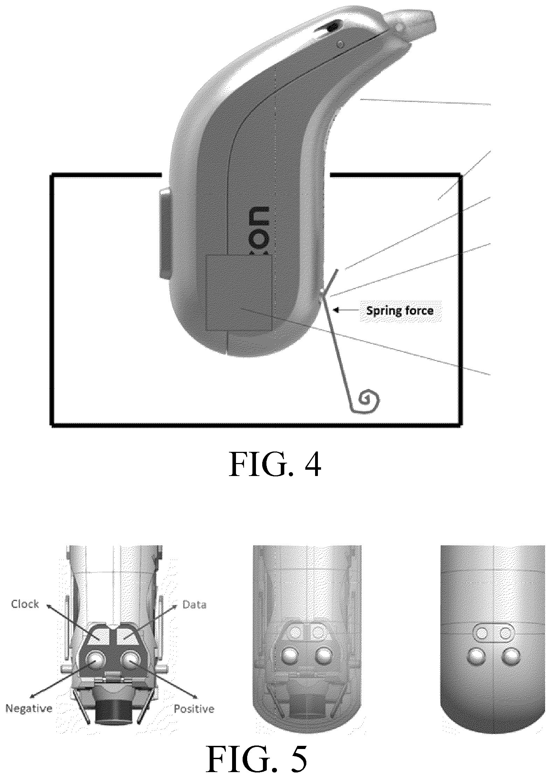

Fig. 4 schematically shows a hearing instrument placed in a charger. The metal spring is configured to exert a force towards the hearing aid charging interface so as to establish reliable contact during charging. in the charger is pressing against the charge pins and create a contact for charging.

FIG. 5 schematically shows a hearing instrument with visible charge pins and colour marking covering the programming interface (top). Charge pins and programming pads on the PCB and visible through the shell (bottom). On the left-hand side, the hearing aid housing is removed, in the middle the hearing aid housing is see-through, on the right-hand side the housing is as seen from a user's viewpoint with the cover of the programming pads removed.

The programming interface comprises the two pads on top, where one pad is used for clock and the other is used for data. One of the charging interface pins is used for a negative contact and the other for a positive contact.

The interface for the hearing aid comprises the following parts (see figures below):
- Charge pins, used for contact charging, soldered on the hearing aid amplifier using pick and place process (SMD process).
- Contact pads, used to program the instrument, gold pads on the PCB.
- Rubber sealing, this sealing ensures sealing towards the shell and the amplifier.
- Spacer, this can be a rubber or foam part, that is compressed and ensures that the charge pads are pressed against the inside of the shell and the sealing libs of the sealing part are compressed.
- Part to cover the programming interface, this can be used to cover the programming pads. This partis not necessary but makes the instrument visually more appealing. The programming pads are only used in production.
- Magnets inside the charger, these magnets pull the hearing aid into the charger.
- Metal plates in the shells, these are used to pull in the instrument into the charger

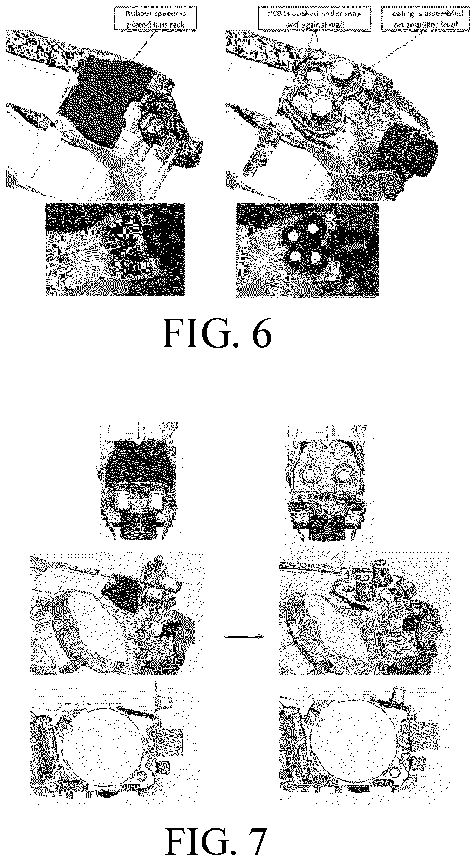

Fig. 6 schematically illustrates Cross section of a hearing aid showing the charging and programming interface.

In the upper left-hand side, a rubber spacer is placed into the rack of the hearing aid, i.e.. Into a structural part of the hearing aid housing, or more precisely an internal part or rack arranged inside the hearing aid housing.

The interface according to the present disclosure provides at least the following advantages:
- Charge pins can be assembled using the SMD process (pick and place machine to place components onto PCB.
- Easy assembly of the hearing instrument.
- Can be integrated as a "charging and programming - module" into future hearing aids.
- Two contacts enable charging of the instrument by placing into a charger.
- Two contacts can be accessed with a probe in production to enable programming of the instrument. These two contacts are placed in the inside of the instrument and can be hidden under a removable part (here color marking).
- The position of the charge pins is controlled by the shell of the instrument, which ensures a short tolerance chain and therefore minimizes the tolerance on the position of the charge pin tip, which has an impact on the displacement of a charger spring inside the charger device. This displacement is results in a spring force, which is necessary to minimize the contact resistance between battery spring and charge pin.

Charging of the hearing aid requires a physical contact to the charge pins with a minimum contact resistance. Therefore, it is necessary to press the contacts together with a certain force. This is done by using contact springs as shown in the figure below. When the device is inserted into the charger, the magnets are pulling the metal plates into the cavity, the springs slide over the charge pins and are displaced, which results in a spring force pressing against the contacts. To ensure low contact resistance, this force should be as high as possible. The upper limit of this force is set by the magnet force, pulling the hearing aid into the charger.

This results in a tight window for the contact force. The position of the charge pads has a big impact on the resulting spring force: If there are further inside the hearing instrument, the spring force is lower, the further out they are, the spring force increases. Same is true for the position of the contact springs. The position of the charge pads and charge springs should therefore have tight tolerances to ensure a constant and controlled spring force (production tolerances).

The spring in the charge is preloaded against the charger cavity. This ensures an exact position of the charge spring inside the cavity and further creates a minimum spring force.

The tip of the charge pads needs to be in a position of 0 mm to +0.2 mm from the surface of the shell. To shorten the tolerance chain, the sealing is pressed against the base shell. **In** this stack-up, it is assumed that the sealing body is acting as rigid and only the sealing libs are deforming.

Fig. 7 schematically illustrates steps of a process of mounting the parts in a hearing aid. Specifically, it is illustrated that the charger interface pins are located at an area or island of a substrate that is bendable and in the upper most left-hand corner, the area extents vertically and a rubber member is placed where the area or island is to be placed, which is shown in the right-hand side. In the right-hand side of the figure, it is shown that the area or island is in contact with the rubber part thereby supporting the area or island. The assembled parts are then closed in a housing or shell.

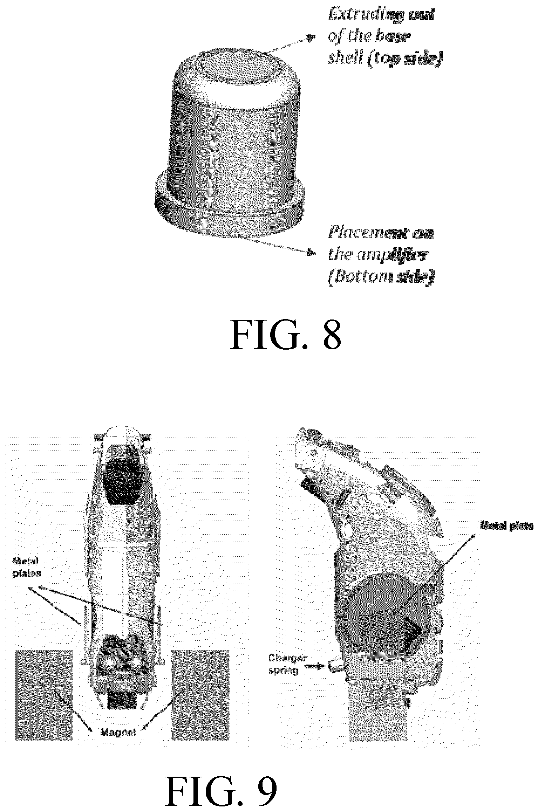

Fig. 8 schematically illustrates a pin for a charging interface according to the present disclosure.

Previous hearing aids have had four programming pads, where the programming of hearing aids in production and service points thus require four connection points. The programming could then be performed through the included dedicated four pads on the hearing aid amplifier. These four pads could be accessible through opening a part of the shell such as battery drawer or push button. Including this feature in the hearing aid design comes with some challenges such as increase in the size of the hearing aids and the risk of corrosion (Additional openings), etc.

In rechargeable hearing aids there is no need of changing batteries anymore, therefore, features such as battery drawers are not needed. Therefore, avoiding a hatch significantly reduces total volume/size of the hearing instruments.

The present disclosure provides an alternative this, which includes:
1. combination of programming pads with charger points,
2. removing the need for additional parts such as push button or battery drawer is needed to be opened/closed to access the required contacts,
3. Hiding the two programming points behind the L/R marking (Clock and DATA),
4. Combination of L/R marking with a cover for Clock and DATA points In order to make HI aesthetically improved and reduce the number of parts.

Rise of rechargeability in hearing instruments has removed the need for changing the batteries by the end users. In other words, the batteries are soldered directly to the main pcb/amplifier. Therefore, there is no need to include a battery drawer. But still four contact points are necessary to be accessible in rack and shell level assemblies in R&D, production, and service points. The four contact points include positive, ground, clock, and data points.

In order to provide these four contact points primarily in shell level assembly. The charge points and two pcb pads were combined. The combination consists of two charge points providing positive and ground(negative) connections, and respectively clock and data are dedicated in the pcb pads.

Additionally, the L/R marking is designed to cover the two pads on the pcb (Clock & DATA). Therefore, L/R marking in addition to the main function of being indication of the left/right placement of HIs, also covers the pads on pcb which are not being used by end users.

In order to achieve a robust charging system of the hearing aids within a corresponding charger, the suction performance of the instruments towards the bottom of the charger cavity should be controlled. Earbuds hearing aids HIs incorporate a magnetic element (magnet/metal plate/ferrite) the guides the instrument towards the magnet charger cavity. Including this conventional system in HIs creates several issues:
1. increase in the length and overall size of the instrument due to the placement of the metal plates at the bottom of the instruments, where there is usually a limited space,
2. Differentiation of the industrial design is very difficult (i.e. It is difficult to have different industrial designs with the same internal architecture) (problematic for branding),
3. Tolerances of the magnetic attraction system is difficult to control, as the magnetic attraction curves are steep,
4. It is difficult to implement for sliding contact systems (i.e. limits the charge contact and spring placement).

The hearing aid according to the present disclosure provides an alternative solution that:
1. allows large levels of differentiation
2. the production/assembly/material tolerances could be controlled,
3. minimum impact on the size of the instrument is achieved,
4. It can be reused in a variety of products and hearing aid styles.

**In** Fig. 9 a hearing aid is illustrates and seen from two different perspectives.

**In** contrast to conventional placement of magnetic elements within the hearing aid and in the chargers; the hearing aid according to the present disclosure uses two metal plates placed on the two (opposite) sides of the hearing aid housing. These two metal plates interact with two neighboring magnets (in the charger).

The charger interface in the hearing aid includes, as discussed elsewhere, two charge pads but also two metal plates. The two charge pads are part of the amplifier, and the metal plates are mounted at the two sides of the hearing aid shell or housing. The two charge pads will be in contact with the two mating springs in the charger. Moreover, the two metal plates are attracted by the created magnetic field from the two magnets placed in the charger.

This configuration allows to control and design the magnetic attraction curve, including the peak force location and span of attraction.

The traditional magnet attraction curves include a peak at the touch surface between the two elements. However, the attraction force decreases sharply by adding distance between the magnetic elements (the magnet in the charger and magnetic element in the hearing aid). Therefore, in order to compensate material/production/assembly tolerances and ensure a proper attraction, larger metal plates and/or magnets are necessary.

For example, if the hearing aid according to the present disclosure, i.e. the improved hearing aid, and conventional systems with similar peak magnetic attractions are compared: in conventional systems, if A mm distance variation between the magnet and the metal plate is achieved after assembly, up to 50% of the peak magnetic attraction might be lost. However, in the hearing aid according to the present disclosure, this loss could be less than 5 %.

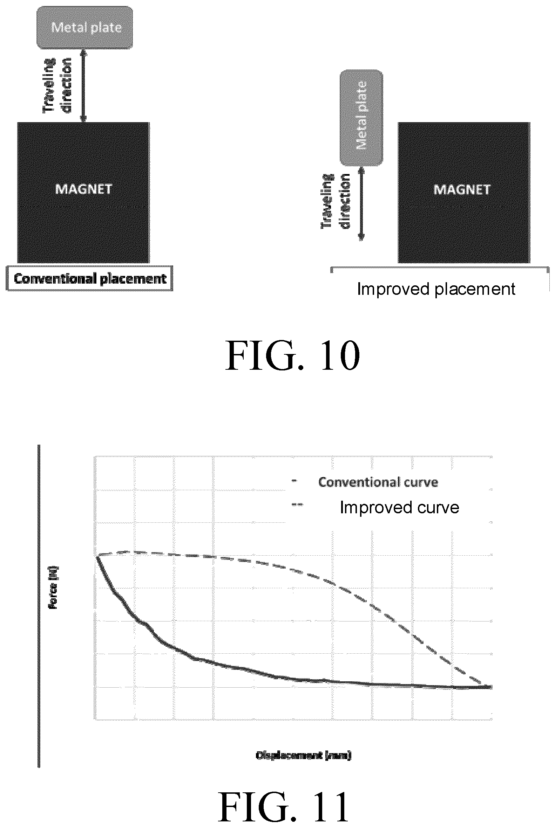

By placing the magnets and metal plates on two (opposing) sides of the hearing aid, metal plates slide over the magnet surface instead of getting closer to the magnet directly. **In** this new arrangement, the mentioned sharp decrease in attraction force is not observed anymore. Moreover, the curves peak and extent of the plateau could be designed and controlled effectively. **In** other words, the magnetic attraction peak could be designed where it should happen. This contrasts with the conventional curves that the final placement of the instrument in the charger cavity is the peak point. This control over the peak point allows additional freedom to industrial design and positioning of the contact points. The movement is illustrated in Fig. 10.

This system according to the present disclosure offers a huge advantage especially in sliding contact systems as the attraction force engagement with the instruments starts earlier (i.e. instrument is attracted and sucked in earlier at top of the charger cavity). Therefore, the charger contacts could be placed for example in the middle of the instrument/hearing aid (instead of bottom), and proper attraction could still be achieved.

Moreover, this attraction system improves the useability of the chargers. The hearing aids are absorbed into the cavity once placed close to the cavity entrance, and the magnets will guide them to the proper resting position. As the result, the user will have an improved mechanical feedback that the instrument is placed properly in the charger.

Fig. 11 schematically illustrates force as a function of displacement for a conventional device and a device/hearing aid according to the present disclosure.

The present disclosure may be characterised by the following items:
1. A hearing aid comprising a rechargeable battery and a charging interface configured to mechanically interface with a charger device for establishing contact charging,
   wherein the charging interface configured comprises a plurality of pins extending through a respective opening of a housing of the hearing aid.
2. The hearing aid according to item 1, wherein the charging interface further comprises programming pads configured to act as a programming interface for the hearing aid, the housing comprising an opening at the programming pads.
3. The hearing aid according to item 2, wherein the charging interface and the programming pads are arranged on the same substrate.
4. The hearing aid according to any one of items 13, wherein the charging interface is arranged on a substrate having a flexible part so that the charging interface is arranged at an angle in the range of 70 to 90 degree relative to a neighboring substrate part, where substrate part carrying the charging interface and the neighboring substrate part are formed as a single substrate.
5. The hearing aid according to any one of items 1-4, wherein a rubber space is placed between the substrate part carrying the charging interface and a structural part of the hearing aid housing and/or a battery compartment and/or the battery.
6. The hearing aid according to item 5, wherein the rubber part is configured to receive the substrate part carrying the charging interface.
7. The hearing aid according to any one of items 5-6, wherein the substrate part carrying the charging interface is held in the intended place by a wall part of the hearing aid housing.
8. The hearing aid according to any one of items 2-7, wherein the hearing aid housing comprises a removable cover arranged at the opening at the programming pads.
9. The hearing aid according to item 8, wherein the cover is color coded to visually indicate if the hearing aid is intended to be used at a right or left ear of a user.
10. The hearing aid according to any one of items 1-9 being constituted by or comprising an air-conduction type hearing aid, a bone-conduction type hearing aid, or a combination thereof
11. The hearing aid according to any one of items 1-10, further two metal plates arranged at one end of the hearing aid housing and configured to as to engage with magnets of a charging device to provide a retention force to keep the hearing aid in place in the charger during a charging operation.
12. A hearing aid charger configured to charge a hearing aid according to item 1.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A hearing aid comprising a rechargeable battery and a charging interface, the charging interface being configured to mechanically interface with a charger device for establishing contact charging,
wherein the charging interface configured comprises a plurality of pins each configured to extend through a respective opening of a housing of the hearing aid, wherein the charging interface is arranged on a substrate having a flexible part so that the charging interface is arranged at an angle in the range of 70 to 90 degree relative to a neighboring substrate part, where substrate part carrying the charging interface and the neighboring substrate part are formed as a single substrate.

2. The hearing aid according to claim 1, wherein the charging interface further comprises programming pads configured to act as a programming interface for the hearing aid, the housing comprising an opening at the programming pads.

3. The hearing aid according to any one of claims 1-2, wherein a telecoil is mounted at the neighboring substrate part.

4. The hearing aid according to claim 3, wherein first and second parts extend from the neighboring substrate part towards the telecoil to form a screen screening the telecoil from electromagnetic fields not being in a direction parallel to a telecoil pick-up axis of the telecoil.

5. The hearing aid according to any one of claims 1-4, wherein the charging interface is arranged on a substrate having a flexible part so that the charging interface is arranged at an angle in the range of 70 to 90 degree relative to a neighboring substrate part, where substrate part carrying the charging interface and the neighboring substrate part are formed as a single substrate.

6. The hearing aid according to any one of claims 1-5, wherein a rubber spacer is placed between the substrate part carrying the charging interface and a structural part of the hearing aid housing and/or a battery compartment and/or the battery.

7. The hearing aid according to claim 6, wherein the rubber spacer is configured to receive or abut the substrate part carrying the charging interface.

8. The hearing aid according to any one of claims 4-5, wherein the substrate part carrying the charging interface is held in the intended place by a wall part of the hearing aid housing.

9. The hearing aid according to any one of claims 2-8, wherein the hearing aid housing comprises a removable cover arranged at the opening at the programming pads.

10. The hearing aid according to claim 8, wherein the cover is color coded to visually indicate if the hearing aid is intended to be used at a right or left ear of a user.

11. The hearing aid according to any one of claims **1-10** being constituted by or comprising an air-conduction type hearing aid, a bone-conduction type hearing aid, or a combination thereof

12. The hearing aid according to any one of claims 1-11, further comprising two metal plates arranged at one end of the hearing aid housing and configured so as to engage with magnets of a charging device to provide a retention force to keep the hearing aid in place in the charger during a charging operation.

13. A hearing aid charger configured to charge a hearing aid according to claim 1, wherein the hearing aid charger comprises a hearing aid receptacle configured to receive at least a part of the hearing aid to be charged.

14. The hearing aid charger according to claim 13, wherein the hearing aid receptacle comprising a charger interface configured to engage the charging interface of the hearing aid when the hearing aid is positioned in the hearing aid receptacle, the charger interface comprising springs acting as electrical conductors during charging.

15. The hearing aid charger according to claim 13 or 14, wherein the hearing aid receptacle comprises a first and a second magnet configured to interact with a first and second metal plate of the hearing aid to be charged.
